**Europäisches Patentamt**

(19) **European Patent Office**

**Office européen des brevets**

(11) Numéro de publication: **0 300 881**
**B1**

(12) # FASCICULE DE BREVET EUROPEEN

(45) Date de publication du fascicule du brevet:
09.05.90

(51) Int. Cl.⁵: **F16H 59/16, B25J 15/02**

(21) Numéro de dépôt: **88401827.6**

(22) Date de dépôt: **13.07.88**

(54) **Dispositif de transmission de mouvement à deux niveaux de vitesse et de maintien d'un effort déterminé après l'arrêt du mouvement.**

(30) Priorité: **17.07.87 FR 8710137**

(43) Date de publication de la demande:
**25.01.89 Bulletin 89/4**

(45) Mention de la délivrance du brevet:
**09.05.90 Bulletin 90/19**

(84) Etats contractants désignés:
**AT BE CH DE ES FR GB GR IT LI LU NL SE**

(56) Documents cités:
**EP-A- 0 144 527**
**DE-C- 469 804**
**FR-A- 1 242 606**
**GB-A- 2 166 710**

(73) Titulaire: **ECOLE NATIONALE SUPERIEURE D'ARTS ET METIERS CENTRE DE PARIS, 151, Boulevard de l'Hôpital, F-75640 Paris Cedex 13(FR)**

(72) Inventeur: **Planard, Philippe, 7 rue Pasteur M-L. King, F-92700 Colombes(FR)**

(74) Mandataire: **Robert, Jean-Pierre et al, CABINET BOETTCHER 23, rue la Boétie, F-75008 Paris(FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Description

La présente invention a pour objet un dispositif de transmission de mouvement entre un organe moteur et un récepteur du mouvement permettant l'entraînement à vitesse rapide du récepteur tant qu'un premier niveau d'effort résistant n'est pas atteint, puis son entraînement à vitesse lente jusqu'à l'obtention d'un effort résistant égal à un seuil déterminé, l'arrêt de la transmission du mouvement lorsque ce seuil est atteint et le maintien de la réaction à l'effort résistant égale audit seuil.

Pour illustrer le problème qu'entend résoudre l'invention, on prendra l'exemple d'une pince qu'il faut fermer rapidement jusqu'au contact des mâchoires avec la pièce à prendre qui peut être de taille variable, qu'il faut ensuite manoeuvrer pour obtenir un certain effet de serrage qu'il convient enfin de conserver constant pendant l'opération de manipulation si la pince est celle d'un manipulateur. On prendra un autre exemple relatif à la fermeture d'un battant de porte qu'il faut amener rapidement vers le dormant, appliquer contre celui-ci sous un certain effort et maintenir cet effort comme verrouillage du battant. En outre, si un obstacle est placé sur le trajet du battant pendant sa course rapide, celle-ci cesse aussitôt en étant remplacée par la course lente qui laisse le temps d'intervenir pour retirer l'obstacle. Le dispositif devient dans ce cas un mécanisme de sécurité.

A cet effet donc, l'invention a pour objet un dispositif du type défini ci-dessus dont le mécanisme d'entraînement comprend un moteur dont les organes de commande comportent un dispositif de coupure à seuil, fonction du couple résistant, accouplé audit organe entraîné par une première voie de transmission comprenant un limiteur de couple dont la sortie est accouplée à l'organe entraîné au moyen d'une liaison élastiquement déformable et par une seconde voie de transmission comprenant un réducteur dont la sortie est reliée à une pièce tournante pourvue d'une première surface de friction liée en rotation à l'organe entraîné, ladite ladite seconde surface de friction étant déplacée entre une première position dans laquelle elle est éloignée de la première surface de friction et une seconde position dans laquelle les deux surfaces sont en contact, par les moyens de liaison déformable susdits lorsque ceux-ci sont déformés sous l'effet d'un couple résistant appliqué à l'organe entraîné.

En outre, la démultiplication de ladite seconde voie est notablement plus importante que celle de la première voie.

Dans une première variante de réalisation, l'organe entraîné est constitué par l'un des éléments d'un système vis-écrou monté à rotation dans le bâti et accouplé à la sortie du limiteur de couple au moyen d'une liaison autorisant un coulissement axial de l'élément dans le bâti à l'encontre de l'effet d'un ressort de rappel, la pièce de friction étant constituée par un plateau radial tournant autour de l'axe de rotation de l'élément, la seconde surface de friction étant portée par un disque radial en rotation sur ledit élément.

Cette variante est adaptée à la réalisation d'un moyen de préhension dans lequel les mâchoires d'une pince sont attelées à l'élément susdit qui sera de préférence l'écrou du système vis-écrou. Lorsque ces mâchoires se referment sur l'objet à saisir, l'écrou est immobilisé le long de la vis tournante, ce qui conduit cette dernière à être déplacée axialement, grâce à la liaison déformable susdite, ce déplacement étant exploité pour commander l'embrayage de la seconde voie de transmission.

Dans une seconde variante de réalisation, le dispositif selon l'invention est tel que la sortie du limiteur de couple est accouplée à un manchon déformable élastiquement dont la surface extérieure constitue la seconde surface de friction, à l'intérieur duquel l'organe entraîné est constitué par un arbre possédant une surface de came qui coopère avec le manchon par au moins un galet de coincement, la pièce tournante de friction étant une chemise extérieure au manchon formant, par sa surface interne, une portée d'appui pour le manchon lorsqu'il est déformé par le galet sous l'effet d'un mouvement relatif de rotation entre le manchon et l'arbre. Ce mouvement relatif intervient dès que le couple résistant appliqué à l'arbre est supérieur à l'effort élastique du manchon déformable qui maintient les galets dans une position moyenne et est supérieur également au seuil du limiteur de couple.

L'invention sera mieux comprise au cours de la description donnée ci-après à titre d'exemple purement indicatif et non limitatif qui permettra d'en dégager les avantages et les caractéristiques secondaires.

Il sera fait référence aux dessins annexés dans lesquels :

- la figure 1 est un schéma des principes du dispositif selon l'invention dans son application à une pince de préhension,
- la figure 2 en montre une version industrielle,
- la figure 3 est une vue d'une variante de réalisation du mécanisme de manoeuvre des mâchoires,
- la figure 4 illustre une variante de la réalisation de la figure 2,
- les figures 5 et 6 sont deux schémas partiels d'une seconde réalisation possible de l'invention dans laquelle les efforts résistants sont exploités sous forme de couple et non sous forme de force axiale comme dans la réalisation précédente.

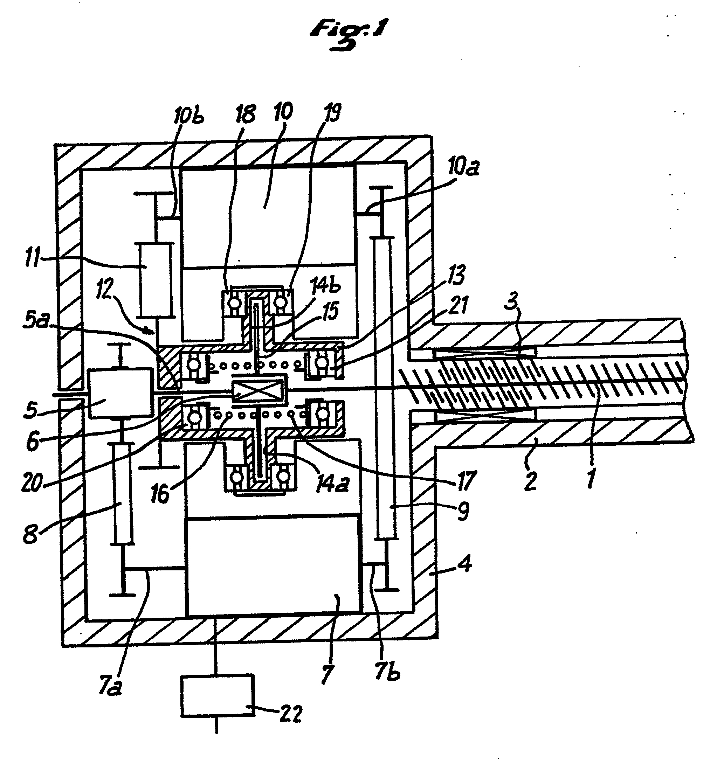

En se reportant à la figure 1 on voit une vis 1 logée dans un fourreau 2 qui constitue un guide d'immobilisation en rotation pour un écrou 3 qui peut y coulisser lorsque la vis 1 tourne. Cet écrou 3 est l'organe de commande d'une ou plusieurs mâchoires non représentées mais dont on verra des réalisations en regard des figures suivantes, qui peuvent s'ouvrir ou se refermer sur un objet à saisir. La liaison écrou-mâchoires est telle que l'appui de ces dernières sur l'objet saisi immobilise l'écrou dans son coulissement et donne naissance à un mouvement axial de la vis par rapport à l'écrou (si cette dernière, bien entendu, continue de tourner).

Il est fait référence dans le présent brevet de mâchoires, ce qui suppose un pincement de l'objet sur lequel elles se referment. On précisera cependent qu'il faut entendre par mâchoire tout palpeur, préhenseur, doigt mobile qui, attelé à l'écrou 3 ou un équivalent, sera immobilisé dans sa course par un objet, fixe par rapport au fourreau 2 ou, plus généralement, au bâti du dispositif, de manière que la vis 1 puisse bouger axialement.

Le fourreau 2 est porté par un bâti général 4 dans lequel pénètre la vis 1. L'extrémité interne de cette vis est accouplée en rotation à l'arbre de sortie 5a d'un limiteur de couple 5 au moyen d'un accouplement 6 permettant un mouvement relatif axial de la vis 1 et de l'arbre 5a. Cet accouplement pourra par exemple être réalisé au moyen d'un carré d'entraînement coopérant avec un logement de section semblable dans lequel il peut coulisser. Le limiteur de couple reçoit en entrée le mouvement de rotation d'un arbre de sortie 7a d'un moteur 7 au moyen d'une courroie 8.

Un second arbre de sortie 7b du moteur 7, tournant dans le même sens que l'arbre 7a, est accouplé en rotation par une courroie 9 à l'entrée 10a d'un réducteur 10, dont l'arbre de sortie 10b est relié par une courroie 11 à un récepteur tournant 12 dans le bâti 4 de l'appareil.

Le récepteur 12 est constitué par un corps de révolution 13 comportant deux surfaces radiales en regard l'une de l'autre 14a et 14b entre lesquelles s'étend un disque 15 solidaire de la vis 1. Chacune des surfaces 14a et 14b constitue un plateau de friction pour le disque 15 qui vient s'y appuyer lorsque la vis 1 est sollicitée en déplacement axial dans les conditions expliquées plus haut. En l'absence de sollicitation axiale, le disque 15 est maintenu écarté de l'une et l'autre des surfaces de friction au moyen de ressorts 16,17 dont les effets axiaux sont antagonistes.

La présence de deux plateaux de friction 14a et 14b pour le disque 15 est justifiée si l'appareil est réversible, c'est-à-dire si l'écrou 3 peut être bloqué dans ses deux sens de déplacement. Ce sera par exemple le cas si la pince attelée à l'écrou 3 peut prendre appui sur la face extérieure de l'objet lors de son serrage ou sur une face interne de celui-ci lors du mouvement inverse. Les références 18,19,20 et 21 repèrent des roulements à billes (ou à aiguilles) permettant d'une part de centrer le corps 13 dans le corps 4 ainsi que de supporter sans frottements les ressorts 16 et 17, et d'autre part d'encaisser les efforts axiaux qui seront engendrés par la vis 1.

On notera enfin que la moteur 7, ici électrique, possède sur son circuit de commande 22 un dispositif électronique connu en soi qui permet de couper l'alimentation de ce moteur si l'intensité de son courant est supérieure à un seuil donné, ce qui signifie si le moteur rencontre un couple résistant supérieur à une valeur prédéterminée.

Pour expliquer le fonctionnement du dispositif, on supposera qu'un déplacement vers la gauche de l'écrou 3 entraîne le serrage des mâchoires qu'il commande. On alimente donc le moteur de manière que la chaîne cinématique de transmission arbre 7a, courroie 8, limiteur 5, arbre 5a, accouplement 6, entraîne la vis 1 dans un sens de rotation provoquant le déplacement vers la gauche de l'écrou 3. Le rapport de transmission sera tel que la rotation de la vis 1 sera assez rapide. Les mâchoires se referment sur l'objet qu'elles viennent toucher. L'écrou 3 est alors instantanément immobilisé, ce qui conduit la vis tournante à se déplacer axialement vers la droite, entraînant le disque 15 au contact de plateau 14a. Le plateau 14a, porté par le corps 13 tourne dans le même sens que le disque 15, grâce à la transmission de mouvement par la chaîne cinématique arbre 7b, courroie 9, arbre 10a, réducteur 10, arbre 10b courroie 11. La vitesse de rotation du plateau 14a est cependent beaucoup plus faible que celle du disque 15, grâce à un choix de rapport de transmission approprié introduit par le réducteur 10.

Ainsi, dès que le disque 15 touche le plateau 14a, le couple résistant que subit l'arbre 5a du limiteur de couple 5 dépasse le seuil de ce limiteur. La vis n'est alors plus entraînée par la première des chaînes de transmission décrites ci-dessus (7a, 8,5, 5a, 6). L'entraînement est alors assuré par l'intermédiaire de la seconde chaîne cinématique (7b, 9, 10a, 10, 10b,11, 12, 14a, 15) à une vitesse beaucoup plus réduite . Cet entraînement à vitesse réduite en rotation de la vis, augmente toujours son déplacement axial, forçant de plus en plus le disque 15 contre le plateau 14a. Le couple résistant que subit le moteur 7 augmente et de la même manière, l'intensité de son courant d'alimentation qui atteint rapidement le seuil de déclenchement du dispositif de coupure de l'alimentation.

Une tendance au déblocage du serrage des mâchoires aurait pour origine une rotation inverse de la vis 1. Cette tendance est contrée par le verrouillage de la chaîne cinématique 15, 14a, 13, 12, 11, 10b, 10, 10a, 9, 7b, 7, 7a, 8 par le limiteur 5.

On comprend que pour ouvrir la pince, il suffit d'alimenter le moteur 7 pour qu'il tourne en sens contraire, décollant lentement le disque 15 de la surface 14a, l'entraînement en rotation étant ensuite assuré par la voie pourvue du limiteur de couple dès que le couple résistant est devenu inférieur au seuil intrinsèque du limiteur. La vitesse d'ouverture de la pince est alors plus rapide.

La préhension d'une pièce tubulaire, par exemple, par sa surface intérieure implique un mouvement de l'écrou vers la droite, ce qui conduira à un contact entre le disque 15 et le plateau 14b.

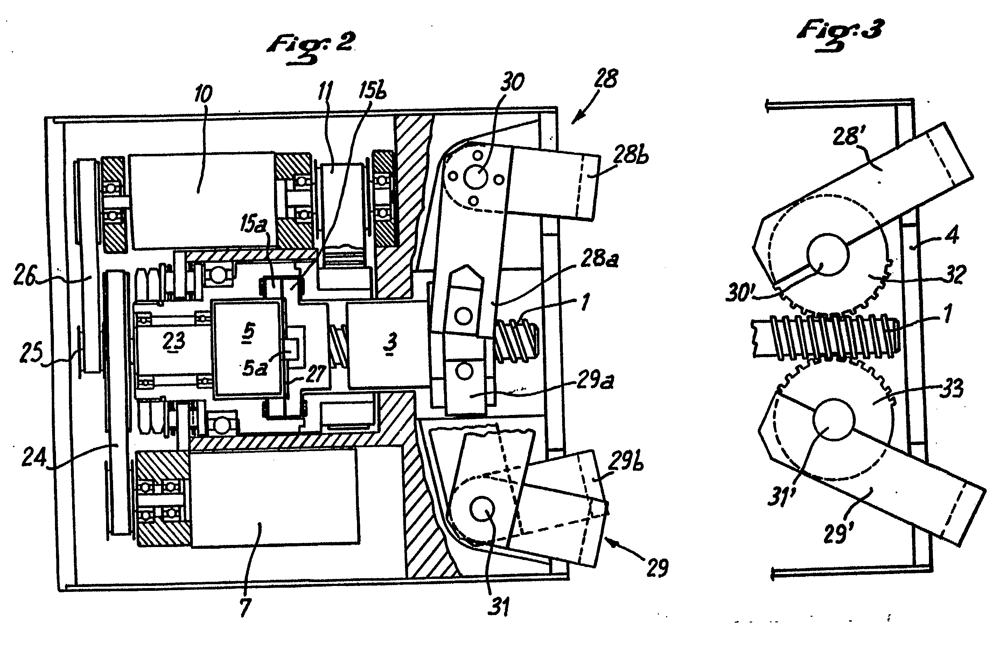

Sur la figure 2 on retrouve certains des éléments déjà décrits avec les mêmes références. L'organisation spatiale des organes mis en oeuvre est légèrement différente, notamment pour améliorer la compacité du dispositif. On notera que dans ce cas le moteur 7 attaque un arbre intermédiaire 23 par une courroie 24, lequel arbre porte le limiteur 5 et une poulie d'entraînement 25 pour une courroie 26 d'entraînement du réducteur 10 . On remarque également que l'accouplement du limiteur 5 à la vis 1 est réalisé par l'intermédiaire d'une coupelle ou lame élastique 27 calée en rotation et en translation sur l'arbre 5a par son centre et pincée par sa périphérie entre deux parties 15a et 15b qui forment réunies le disque 15, solidaire de la vis 1.

L'écrou 3 constitue chape d'articulation et de coulissement pour les extrémités 28a, 29a de leviers coudés 28, 29, qui sont articulés par leur coude en 30, 31 au bâti 4 autour d'axes perpendiculaires à la vis 2 de manière à pouvoir converger vers ou diverger de l'axe de la vis. Les extrémités libres 28b, 29b des leviers constituent lesdites mâchoires ou des supports pour celles-ci.

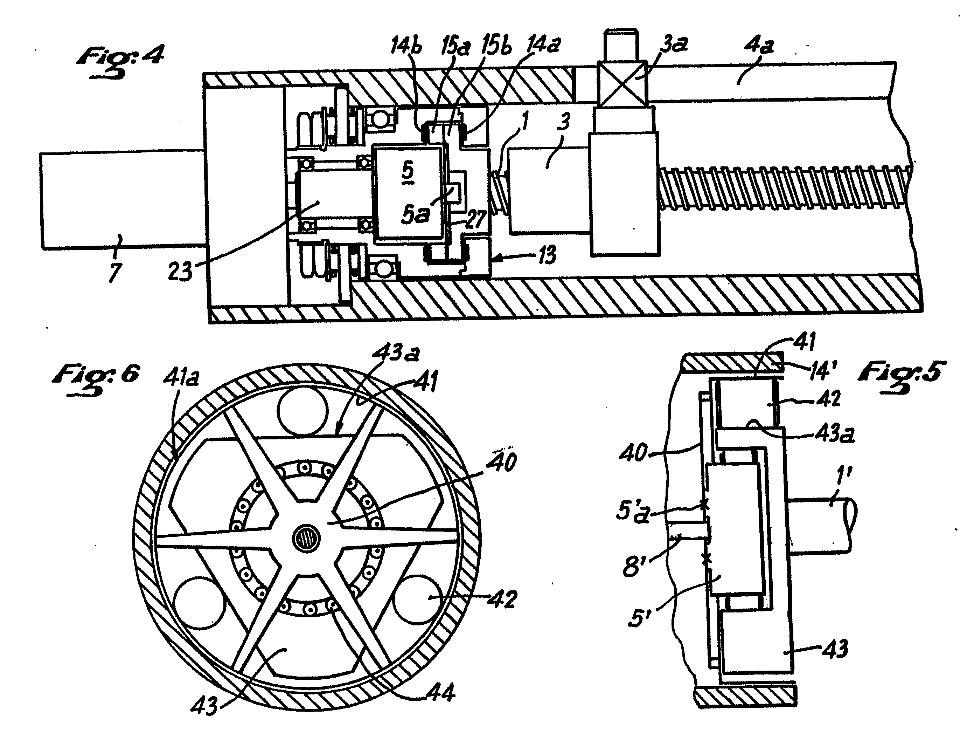

En figure 3 on voit que l'écrou a été remplacé par deux roues dentées 32, 33 qui coopèrent avec la vis 1 pour animer le débattement de levier 28', 29' articulés sur le bâti 4 autour d'axes 30', 31' ici confondus avec ceux des roues, mais qui pourraient être différents, les roues appartenant à un train d'engrenage de multiplicateur ou réducteur du mouvement.

Aux figures 2 et 3 ne sont représentés que deux leviers diamétralement opposés. On peut bien entendu mettre en oeuvre une pluralité de leviers pour disposer de plusieurs bras de pince.

La figure 4 illustre une version du moyen selon l'invention qui ne met en oeuvre qu'une mâchoire mobile, l'autre mâchoire fixe non représentée, pouvant être constituée par un élément du bâti du dispositif ou d'un autre organe auquel le dispositif est attelé.

On retrouve dans ce dessin, la disposition de la figure 2 pour ce qui concerne l'entraînement de la vis à la disposition du moteur 7 près. En revanche, l'écrou 3 est pourvu d'une extension radiale 3a qui coulisse dans une ouverture 4a du bâti 4, ici en forme de fourreau, formant arrêt de l'écrou en rotation et doigt de fixation d'une mâchoire ou tout autre organe de palpage devant s'appuyer sur un corps avec une force constante et maintenir cette force.

Dans la description qui précède, c'est la vis 1 qui est manoeuvrée en rotation par les voies de transmission. Ce n'est pas sortir du cadre de l'invention que de prévoir un entraînement en rotation de l'écrou 3, la vis étant alors guidée dans le bâti pour y coulisser axialement sous l'effet de la rotation de l'écrou. Elle devrait bien entendu traverser les organes d'accouplement, ce qui constituerait une cause d'augmentation de l'encombrement radial du dispositif.

Les figures 5 et 6 sont l'illustration d'un second mode de réalisation de l'invention dans lequel les éléments constitutifs assurant des fonctions identiques portent des références semblables à celles des figures précédentes augmentées d'un "prime".

C'est ainsi qu'un limiteur de couple est appelé 5' dont l'entrée 8' est reliée au moteur non représenté. Sa sortie 5'a est solidaire en rotation d'un plateau radial étoilé 40 qui, à l'extrémité des branches de l'étoile, porte un manchon 41 déformable coaxial à l'axe du limiteur. La surface 41a du manchon 41 est en regard d'une chemise cylindrique 14' qui elle est entraînée en rotation par une voie de transmission semblable à celle de la figure 1, qui entraîne le corps 13. A l'intérieur du manchon 41, on trouve trois galets (rouleaux ou billes) 42 qui coopèrent avec les méplats 43a d'un disque 43 d'extrémité de l'organe entraîné qui est ici un arbre 1'. Cet arbre 1' est, par le disque 43, monté sur un palier à rouleaux 44 dont le support intérieur est le boîtier de sortie 5'a du limiteur 5'.

On comprend que la sortie du limiteur entraîne le flasque étoile 40 donc le manchon 41. Ce dernier étant élastiquement déformable a suffisamment de raideur pour entraîner l'arbre 1' par l'intermédiaire des galets 42. En l'absence de couple résistant sur l'arbre 1', la rotation de la sortie du limiteur est transmise intégralement à cet arbre sous un faible couple. Si, en revanche, un couple résistant apparaît, l'arbre 1' et le disque 43 sont freinés par rapport au manchon 41 du fait de l'atteinte du seuil du limiteur de couple, et les galets 42 ont tendance à s'écarter vers l'extérieur en roulant sous les méplats 43a. Ce mouvement déforme le manchon 41 qui vient au contact de la chemise 14' qui elle tourne dans un sens augmentant le coincement donc le contact entre les deux pièces. La friction devient rapidement telle que l'arbre 1' est entraîné à vitesse lente par la chemise 14' jusqu'au moment où le seuil de coupure du moteur est atteint. L'effort à la coupure est conservé par la chaîne de transmission pour les mêmes raisons que celles expliquées précédemment.

Une chaîne de transmission à deux voies, comme dans l'invention, peut être exploitée comme dispositif de sécurité car elle permet un changement d'état qui se produit dès qu'un obstacle imprévu cause une résistance, qui peut être réglée à un seuil très bas, à la transmission qui passe immédiatement en petite vitesse, laissant alors le temps de dégager l'obstacle avant que de graves dommages ne surviennent.

L'invention trouve une application intéressante dans le domaine des appareils de préhension et de sécurité ainsi que dans les outils à limiteur de couple du genre visseuse ou clé dynamométrique.

## Revendications

1. Dispositif de transmission de mouvement à deux niveaux de vitesse, et de maintien d'un effort déterminé après l'arrêt du mouvement, comprenant dans un bâti (4) un mécanisme d'entraînement d'un organe rotatif par rapport au bâti, caractérisé en ce que le mécanisme d'entraînement comprend un moteur (7) dont les organes de commande (22) comportent un dispositif de coupure à seuil, fonction du couple résistant, accouplé audit organe entraîné par une première voie de transmission comprenant un limiteur (5, 5') de couple dont la sortie (5a, 5'a) est accouplée à l'organe entraîné (1, 1') au moyen d'une liaison élastiquement déformable (6, 16, 17, 41) et par une seconde voie de transmission comprenant un réducteur (10) dont la sortie (10b) est reliée à une pièce tournante (13, 14') pourvue d'une première surface de friction pour coopérer avec une seconde surface de friction (15, 41a) liée en rotation à l'organe (1, 1') entraîné, ladite seconde surface de friction étant déplacée entre une première position dans laquelle elle est éloignée de la première surface de friction et une seconde position dans laquelle les deux surfaces sont en contact, par les moyens de liaison déformable susdits lorsque ceux-ci sont déformés sous l'effet d'un couple résistant appliqué à l'organe entraîné (1, 1').

2. Dispositif selon la revendication 1, caractérisé en ce que la démultiplication de ladite seconde voie est notablement plus importante que celle de la première voie.

3. Dispositif selon la revendication 2 caractérisé en ce que l'organe entraîné est constitué par l'un des éléments d'un système vis-écrou (1, 3) monté à rotation dans le bâti et accouplé à la sortie (5a) du limiteur de couple (5) au moyen d'une liaison (6) autorisant un coulissement axial de l'élément dans le bâti à l'encontre de l'effet d'un ressort (16,17) de rappel, la pièce de friction étant constitué par un plateau radial (14a, 14b) tournant autour de l'axe de rotation de l'élément, la seconde surface de friction étant portée par un disque (15) radial calé en rotation sur ledit élément (1).

4. Dispositif selon la revendication 3 caractérisé en ce que l'élément susdit est la vis (1) du système vis-écrou (1, 3).

5. Dispositif selon l'une quelconque des revendications 3 et 4, caractérisé en ce qu'il comporte deux plateaux (14a, 14b)de friction parallèles entre lesquels le disque (15) susdit est disposé et maintenu, au repos, écarté des plateaux par des organes élastiques (16, 17) à effets antagonistes.

6. Dispositif selon l'une quelconque des revendications 3 et 5, caractérisé en ce que les moyens de liaison élastiquement déformables susdits sont constitués par une lame de ressort (27) radiale formant liaison en rotation entre la sortie (5a) du limiteur et l'élément (1) du système vis-écrou.

7. Moyen de préhension faisant application de l'une quelconque des revendications 4 à 6, caractérisé en ce qu'il comporte au moins deux mâchoires dont au moins l'une est mobile et est constituée par une extension radiale (3a) d'un écrou (3) immobilisé en rotation et coopérant avec la vis (1).

8. Moyen de préhension faisant application de l'une quelconque des revendications 4 à 6, caractérisé en ce qu'il comporte au moins deux mâchoires dont l'une (28a, 29a) au moins est constituée par l'extrémité libre d'un levier coudé (28, 29) articulé par son coude (30, 31) audit bâti (4) et attelé par son autre extrémité à un écrou (3) coopérant avec ladite vis (1).

9. Moyen de préhension faisant application de l'une quelconque des revendications 4 à 6, caractérisé en ce qu'il comporte au moins une mâchoire constituée par l'extrémité d'un levier (28', 29') articulé par son autre extré mité sur le bâti (4) et accouplé en rotation autour de son articulation avec une roue dentée (32, 33) qui coopère avec la vis (1).

10. Dispositif selon la revendication 2, caractérisé en ce que la sortie du limiteur (5') de couple est accouplée à un manchon (41) déformable élastiquement dont la surface extérieure (41a) constitue la seconde surface de friction, à l'intérieur duquel l'organe entraîné est constitué par un arbre (1') possédant une surface (43a) de came qui coopère avec le manchon (41) par au moins un galet (42) de coincement, la pièce tournante de friction (14') étant une chemise extérieure au manchon (41) formant, par sa surface interne, une portée d'appui pour le manchon lorsqu'il est déformé par le galet (42) sous l'effet d'un mouvement relatif de rotation entre le manchon (41) et l'arbre (1').

**Claims**

1. An apparatus for transmitting movement at two speed levels and maintaining a given force after the movement stops, comprising in a support structure (4) a mechanism for driving a rotary member with respect to the support structure characterised in that the drive mechansim comprises a motor (7), the control members (22) of which comprise a threshold cutoff device dependent on the resisting torque, coupled to said driven member by a first transmission path comprising a torque limiter (5, 5'), the output (5a, 5'a) of which is coupled to the driven member (1, 1') by means of a resiliently deformable connection (6, 16, 17, 41), and by a second transmission path comprising a reducing means (10), the output (10b) of which is connected to a rotating member (13, 14') provided with a first friction surface for co-operating with a second friction surface (15, 41a) which is connected for rotary movement to the driven member (1, 1'), said second friction surface being displaced between a first position in which it is remote from the first friction surface and a second position in which the two surfaces are in contact, by said deformable connecting means when the latter are deformed under the effect of a resisting torque applied to the driven member (1, 1').

2. An apparatus according to claim 1 characterized in that the step-down effect of said second path is substantially greater than that of the first path.

3. An apparatus according to claim 2 characterised in that the driven member is formed by one of the elements of a screw-nut system (1, 3) mounted rotatably in the support structure and coupled to the output (5a) of the torque limiter (5) by means of a connection (6) permitting axial sliding movement of the element in the support structure against the force of a return spring (16, 17), the friction member being formed by a radial plate (14a, 14b) which turns about the axis of rotation of the element, the second friction surface being carried by a radial disc (15) which is fixed in respect of rotary movement on said element (1).

4. An apparatus according to claim 3 characterised in that said element is the screw (1) of the screw-nut system (1, 3).

5. An apparatus according to either one of claims 3 and 4 characterised in that it comprises two parallel friction plates (14a, 14b), between which said disc (15) is disposed and held in the rest condition spaced from the plates by oppositely acting resilient members (16, 17).

6. An apparatus according to either one of claims 3 and 5 characterised in that said resiliently deformable connecting means are formed by a radial spring blade (27) forming a connection in respect of rotary movement between the output (5a) of the limiter and the element (1) of the screw-nut system.

7. A gripping means using any one of claims 4 to 6 characterised in that it comprises at least two jaws of which at least one is movable and is formed by a radial extension (3a) of a nut (3) which is immobilised in respect of rotary movement and which co-operates with the screw (1).

8. A gripping means using any one of claims 4 to 6 characterised in that it comprises at least two jaws of which one (28a, 29a) is formed by the free end of an elbow lever (28, 29) which is pivotally mounted by its elbow portion (30, 31) to said support structure (4) and coupled by means of its other end to a nut (3) co-operating with said screw (1).

9. A gripping means using any one of claims 4 to 6 characterised in that it comprises at least one jaw formed by the end of a lever (28', 29') which is pivotally mounted by means of its other end to the support structure (4) and coupled in respect of rotary movement about its pivot mounting to a toothed wheel (32, 33) co-operating with the screw (1).

10. An apparatus according to claim 2 characterised in that the output of the torque limiter (5') is coupled to a resiliently deformable sleeve (41), the external surface (41a) of which constitutes the second friction surface, and within which the driven member is formed by a shaft (1') having a cam surface (43a) co-operating with the sleeve (41) by means of at least one locking roller (42), the rotary friction member (14') being a casing which is external to the sleeve (41) and by means of its internal surface forming a support surface for the sleeve when it is deformed by the roller (42) under the effect of a relative rotary movement as between the sleeve (41) and the shaft (1').

**Patentansprüche**

1. Zweiganggetriebe für die Übertragung einer Bewegung mit einer vorbestimmten Haltekraft beim Anhalten der Bewegung, umfassend in einem Gehäuse (4) einen Antriebsmechanismus für ein relativ zum Gehäuse drehbares Organ, dadurch gekennzeichnet, daß der Antriebsmechanismus einen Motor (7) umfaßt, dessen Steuerorgane (22) eine von einem Widerstandsmoment abhängige Schwellenwert-Unterbrechungsvorrichtung aufweisen, die an das angetriebene Organ angekuppelt ist über einen ersten Übertragungsweg, welcher einen Drehmomentbegrenzer (5, 5') umfaßt, dessen Ausgang (5a, 5'a) mittels einer elastisch verformbaren Verbindung (6, 16, 17, 41) an das angetriebene Organ (1, 1') angekuppelt ist, und über einen zweiten Übertragungsweg, der ein Untersetzungsgetriebe (10) aufweist. dessen Abtrieb (10b) mit einem Drehteil (13, 14') verbunden ist, das eine erste Reibfläche zum Zusammenwirken mit einer drehfest mit dem angetriebenen Organ (1, 1') verbundenen zweiten Reibfläche (15, 41a)) aufweist, wobei die zweite Reibfläche zwischen einer ersten der ersten Reibfläche fernen Stellung, und einer zweiten Stellung, in der die zwei Flächen miteinander in Kontakt stehen, durch die verformbaren Verbindungsmittel verstellbar ist, wenn diese unter dem Einfluß eines an dem angetriebenen Organ (1, 1') angreifenden Widerstandsmoments verformt werden.

2. Getriebe nach Anspruch 1, dadurch gekennzeichnet, daß die Untersetzung des zweiten Übertragungsweges beträchtlich größer ist als diejenige des ersten Übertragungsweges.

3. Getriebe nach Anspruch 2, dadurch gekennzeichnet, daß das angetriebene Organ durch eines der Elemente eines Schrauben-Mutter-Systems (1, 3) gebildet ist, das drehbar in dem Gehäuse gelagert und an den Ausgang (5a) des Drehmomentbegrenzers (5) mittels einer Verbindung (6) gekuppelt ist, die eine axiale Verschiebebewegung des Elementes in dem Gehäuse gegen die Wirkung einer Rückstellfeder (16, 17) gestattet, wobei das Reibteil durch eine radiale Platte (14a, 14b) gebildet wird, die um die Drehachse des Elements drehbar ist, und die zweite Reibfläche von einer drehfest mit dem Element (1) verbundenen radialen Scheibe (15) getragen wird.

4. Getriebe nach Anspruch 3, dadurch gekennzeichnet, daß das Element die Schraube (1) des Schrauben-Mutter-Systems (1, 3) ist.

5. Getriebe nach einem der Ansprüche 3 oder 4, dadurch gekennzeichnet, daß es zwei parallele Reibplatten (14a, 14b)) aufweist, zwischen denen die Scheibe (15) angeordnet und im Ruhezustand durch entgegengesetzt wirkende federnde Glieder (16, 17) in Abstand von den Platten gehalten wird.

6. Getriebe nach einem der Ansprüche 3 bis 5, dadurch gekennzeichnet, daß die elastisch verformbaren Verbindungsmittel durch einen radialen Federstreifen (27) gebildet sind, der eine Drehverbindung zwischen dem Ausgang (5a) des Drehmomentbegrenzers und dem Element (1) des Schrauben-Mutter-Systems herstellt.

7. Greifeinrichtung unter Anwendung eines der Ansprüche 4 bis 6, dadurch gekennzeichnet, daß sie wenigstens zwei Klemmbacken umfaßt, von denen wenigstens eine beweglich ist und von einer radialen Erweiterung (3a) einer drehfest gehaltenen und mit der Schraube (1) zusammenwirkenden Mutter (3) gebildet wird.

8. Greifeinrichtung unter Anwendung eines der Ansprüche 4 bis 6, dadurch gekennzeichnet, daß sie wenigstens zwei Klemmbacken umfaßt, von denen wenigstens eine (28a, 29a) durch das freie Ende eines Winkelhebels (28, 29) gebildet wird, der mit seinem Winkelabschnitt (30, 31) gelenkig an dem Gehäuse (4) gelagert und mit seinem anderen Ende an einer mit der Schraube (1) zusammenwirkenden Mutter (3) befestigt ist.

9. Greifeinrichtung unter Anwendung eines der Ansprüche 4 bis 6, dadurch gekennzeichnet, daß sie wenigstens eine Klemmbacke aufweist, die durch das Ende eines Hebels (28', 29') gebildet wird, welcher mit seinem anderen Ende an dem Gehäuse (4) angelenkt und mit einem mit der Schraube (1) zusammenwirkenden Zahnrad (32, 33) für eine Drehung um sein Gelenk gekoppelt ist.

10. Getriebe nach Anspruch 2, dadurch gekennzeichnet, daß der Ausgang des Drehmomentbegrenzers (5') an eine elastisch verformbare Hülse (41) angekuppelt ist, deren Außenseite (41a) die zweite Reibfläche bildet, und innerhalb der das angetriebene Organ durch eine Welle (1') gebildet wird, die eine mit der Hülse (41) durch wenigstens eine Klemmrolle (42) zusammenwirkende Nockenfläche (43a) besitzt, wobei das drehende Reibteil (14') ein die Hülse (41) umgebender Außenmantel ist, der mit seiner Innenfläche eine Abstützung für die Hülse bildet, wenn diese durch den Klemmkörper (42) aufgrund einer relativen Drehbewegung zwischen der Hülse (41) und der Welle (1') verformt wird.

# Fig.1

Fig.3

Fig.2

Fig.4

Fig.5

Fig.6